# EUROPEAN PATENT APPLICATION

(11) **EP 4 729 991 A1**
(43) Date of publication of application: **22.04.2026**
(21) Application number: 24207236.1
(22) Date of filing: 17.10.2024
(51) Int. Cl.: G01T 1/17, G01T 1/24

(54) **X-RAY DETECTION SYSTEM**

(71) Applicant: Siemens Healthineers AG, 91301 Forchheim (DE)
(72) Inventor: Göderer, Edgar, 91301 Forchheim (DE); Hosemann, Michael, 91056 Erlangen (DE); Sabadell, Justo, 81669 München (DE); Suttorp, Thomas, 80686 München (DE)
(74) Representative: Siemens Healthineers Patent Attorneys

(57) **Abstract**

The present invention relates to an X-ray detection system comprising a detector unit (3) for generating an input signal (IS) based on detected X-ray photons and a signal processing device (11) for processing the input signal, wherein the signal processing device (11) comprises
- input means for receiving the input signal (IS),
- processing means for generating an output signal (OS) from the input signal (IS),
- controlling means for influencing the input signal (IS),
- the controlling means being capable of
* determining a statistical value of the output signal (OS),
* comparing the statistical value with a pregiven setpoint value and
* influencing the input signal such that the difference between the statistical value and the setpoint value in the output signal is reduced.

## Description

The present invention relates to an X-ray detection system comprising a signal processing device comprising input means for receiving an input signal based on detected X-ray photons, processing means for generating an output signal from the input signal and controlling means for influencing the input signal based on a determined statistical value of the output signal. Furthermore, the present invention relates to a photon counting X-ray imaging system including such an X-ray detection system. Additionally, the present invention relates to a computed tomography device and a method of processing a signal.

In general, the task of photon counting systems for medical X-ray imaging, but also of other particle detectors, is to detect and count pulses generated by the registered particles and typically also to determine their energy. For this purpose, a sensor material (e.g. CdTe, CdZnTe, Si,...) is used in direct converting detectors, for example, in which electron/hole pairs are generated when the photons are absorbed. With the help of a depletion voltage (also: bias voltage), the electron/hole pairs are separated and directed to opposite electrodes of the sensor. This influences a current signal on the electrodes, which is typically detected by an electronic circuit on the side of the pixelated electrode. This amplifies the charge pulses, performs pulse shaping if necessary and then compares the signal with at least one comparator. Each X-ray quantum thus generates a short current pulse when absorbed in a direct-converting sensor, the size/total charge of which is proportional to the energy deposited.

When the set comparator threshold is exceeded, the photon is finally detected and counted. At the same time, the minimum energy that a photon must have in order to be detected is determined by the choice of threshold. The energy of the detected photon can be determined in particular by using several comparators with different thresholds.

The following problem arises when correctly determining the photon energy:
- As the sequence of the X-ray quanta is random, overlapping of the individual pulses (so-called "pileup") occurs more frequently, especially at high flux. This raises the specific technical problem of making the energy classification of the pulse measurement as stable and robust as possible over a wide range of possible X-ray fluxes.
- Applying the depletion voltage to the sensor material results in a leakage or dark current even without incoming photons. This depends on various parameters (sensor material, electrode types and materials, thickness of the sensor, voltage difference, temperature, current and previous radiation intensity, etc.) and is typically subject to slow fluctuations. With transimpedance amplifiers, this low-frequency signal component would shift the output signal of the amplifier, which would lead to a shift in the detected photon energies if the comparator thresholds remained unchanged, and must therefore be compensated for. With charge-sensitive preamplifiers, a change in the leakage current leads to suboptimal compensation and thus also to a distortion of the detected photon energy or even to saturation of the amplifier.

- If a photon flux is present, the actual signal is superimposed on the dark current. In the case of individual pulses with a sufficient time interval, each pulse would start on the baseline (the resting state without pulses) and return there completely. The pulse height and thus the photon energy could thus be determined correctly. However, as the photon flux increases, the low-frequency signal component also increases, which makes it difficult to compensate only for the dark current.
- Furthermore, the pulses overlap more and more frequently, i.e. they overlap (so-called pile-up case) and can be recognized as photons with higher energy. As a result, the count rate spectrum, which represents the counting events per time as a function of photon energy, is erroneously shifted in relation to the energy spectrum of the X-ray source as a function of the photon flux. The random sequence of the X-ray quanta therefore leads to increased superposition of the individual pulses due to pileup, particularly at high flux. This raises the specific technical problem of making the energy classification of the pulse measurement as stable and robust as possible over a wide range of possible X-ray fluxes.
- Particularly in the field of medical X-ray imaging, and even more particularly in computed tomography, the photon flux can change rapidly, i.e. from one measurement interval to the next, if a different area of the target with different absorption properties is scanned. If the baseline of the signal is then not adapted quickly enough to the changed photon flux, this also leads to falsified measurement results.

In many typical implementations, the problem remains unsolved or is only partially addressed.

For example, the sensor leakage current can be determined before the actual X-ray measurement and then compensated for by an adjusted static current at the input node ("static leakage current compensation").

Alternatively, the compensation current can also be slowly adjusted dynamically ("dynamic leakage current compensation"), for example using a resistive feedback amplifier with a suitable transfer function. In this case, it makes sense for the feedback path to start after the first amplifier, thus ensuring that the output signal remains within its dynamic range. The feedback path typically contains a resistive (R) as well as a capacitive path (C) or a more complex impedance network (e.g Krummenacher feedback, Self-Cascoded FET with pole-zero cancellation (compare e.g. WO2024086081A). Depending on the configuration of R and C, the amplifier is then referred to as a transimpedance amplifier (R determines gain, C negligibly small, "TIA"), as a charge-sensitive amplifier (R almost infinite, C determines gain, "CSA"), as a charge-sensitive amplifier with continuous reset (R large, controls reset time constant, C determines gain). The transition between the types is continuous and there are also sensible mixed forms (R small enough to determine the gain, C large enough to ensure a certain charge collection time). Generally speaking, then, it is simply the feedback impedance that determines the transfer function of the amplifier, and in particular the low-frequency part of the transfer function provides compensation for the incoming sensor leakage current.

The energy classification is often only designed for the low-flow case. In this case, all pulses start from a known rest position and the maximum height above the rest position is a measure of the energy of the pulse. Deviations due to pileup are then often addressed by downstream numerical corrections (e.g. linearity corrections or spectral beam hardening corrections).

One possibility is the use of bipolar pulse shaping, in which a downstream undershoot compensates for the positive signal pulse. In this case, the net shift of the rest position is zero, so that the energy levels are briefly disturbed by other pulses, but not systematically shifted.

A dedicated circuit element, a so-called baseline restorer (BLR) or baseline holder (BLH), is usually implemented in particle detectors for dynamic adjustment of the signal baseline. A topology consisting of a preamplifier with a downstream (and capacitively isolated) pulse shaper is often found in photon counting. In this case, the BLH/BLR is necessary in order to establish a defined output level at all.

The baseline restorer (BLR) detects pulse-free times and pulls the signal to the desired baseline during these times. To be able to do this, it usually has a high bandwidth. Particularly in applications such as medical X-ray imaging with sometimes high photon fluxes, phases without pulses can be correspondingly rare and difficult to detect. For this reason, the use of a BLR in applications with long-term high photon fluxes is only suitable to a limited extent.

In contrast to the BLR, the baseline holder (BLH) is characterized by a low bandwidth and filters the low-frequency components out of the signal in order to then compensate for them. The typical BLH architecture is such that the difference between the amplified and pulse-shaped signal and the desired baseline is first amplified and, if necessary, processed with a non-linear function. The result is then low-pass filtered and converted into a current, which is then fed into the detector input for compensation.

Without using a non-linear function, the running average value of the signal is basically determined and compensated. This behavior corresponds to the AC coupling of the signal. As a result, the average value of the signal is also compensated at higher photon fluxes.

A different behavior is achieved if a non-linear function is applied to the differential voltage between the signal and the desired baseline. In the case of unipolar pulses, for example, the signal components below the baseline are weighted much more heavily than the components above. This can be realized, for example, by limiting the slew rate, which is only effective in one direction. Such non-linear behavior shifts the signal in such a way that the negative peak values are located on the baseline. This BLH behavior is also referred to as DC-coupled and essentially only compensates for the dark current.

The various baseline holders therefore differ in particular in their response behavior. Known types are
- AC-like coupling, in which the integral of the deviation of the output signal from the target value is regulated to zero. The aim here is for the average deviation to be zero, very similar to a bipolar pulse shape. In contrast to this, unipolar pulses can also be used with the baseline holder variant and the time constant of the reaction can be selected as required. With an intermediate pulse shape (proportional undershoot), the feedback effect is divided proportionally between the pulse shape and the baseline holder.
- Feedback with a certain time constant and with a reaction strength proportional to the deviation (RC-like behavior). The response strength and time constant can be set here, but a compromise must be made between the influence of high signal pulses and the feedback strength in the case of high flux. Large pulses are changed more than smaller pulses. Furthermore, the severity of the pulse-height-dependent influence depends on the current strength of the signal flow / pileup level. In combination, these two factors undermine the robustness of the energy classification.
- Feedback with a constant current strength so that the signal returns to the base line with a constant, signal independent slope, thereby causing a triangular pulse shape. This has the advantage of a predictable, pulse-height-independent effect on the signal pulses. However, it also causes a time-varying shift in the energy scale. In addition, the time until the return to the rest position depends linearly on the level of the previous deflection and does not have a uniform time constant.
- Asymmetrical response to overshoot or undershoot of the target voltage, in particular with low response to overshoot during signal pulses (e.g. using a large R), but strong response to undershoot of the target voltage (e.g. using a diode). The aim here is to ensure a minimum output level, which is set in particular as soon as a useful signal is no longer present, while at the same time minimizing the influence on the pulses in the event of a signal. The disadvantage is that a shift in the energy scale caused by pileup is hardly or not at all compensated. This type is very similar to a baseline restorer in the way it works.

The object of the present invention is to provide stable and robust X-ray detection.

According to the present invention this object is solved by an X-ray detection system and a method of processing a signal as set out in the independent claims. Further, preferable developments are defined in the subclaims. Independent of the grammatical term usage, individuals with male, female or other gender identities are included within the term.

In one aspect, there is provided an X-ray detection system comprising a detector unit for detecting X-ray photons and for generating an input signal based on the detected X-ray photons and an advantageous signal processing device for processing the input signal.

An advantageous signal processing device comprises input means for receiving an input signal and processing means for generating an output signal from the input signal. The signal processing device transforms the input signal to an output signal. The input means is capable of receiving the input signal. For example, the input means is realized by an interface which receives the input signal from an external unit. The external unit in case of the above-mentioned X-ray detection system is the respective detector unit capable of detecting X-ray photons and of generating the input signal based on the detected photons. The input signal generated by the detector unit is then received by input means of the signal processing device. The external unit in other applications may be, for example, a memory unit or a data network. The input means may comprise one or more memory units.

The processing means for generating an output signal from the input signal may include an amplifier for amplifying the input signal. Furthermore, the processing means optionally includes a shaper for shaping the amplified input signal, thus obtaining the output signal.

Furthermore, the signal processing device comprises the controlling means for influencing the input signal. E.g. the controlling means is capable of varying the offset or adding current to the input signal.

Furthermore, the controlling means is capable of determining a statistical value of the output signal. The statistical value may relate to pulses of the output signal. Furthermore, the controlling means is capable of comparing the statistical value with a pregiven setpoint value. In other words, the actual statistical value is compared with a target value. Additionally, the controlling means is capable of influencing the input signal such that the difference between the statistical value and the setpoint value in the output signal is reduced. For instance, the offset of the signal is varied in such a way that the difference between both values is minimal.

For instance, the output signal differs from the input mainly in terms of amplification (and shaping). The output signal can also have a completely independent offset. However, the value of the output offset can be influenced by changing the input offset. This enables a control loop to minimize the statistical characteristic in the output by controlling the offset on the input.

Advantageously, the input signal is optimized in relation to a specific statistical value by simply changing the offset of the input signal.

The detector unit comprised by the X-ray detection system may comprise a sensor, e.g. comprising CdTe, CdZnTe, Si, ... as sensor material in case of a direct converting detector. In response to an absorbed photon within the sensor, a current signal is influenced at the sensors' electrodes, representing the input signal to an electronic circuit for processing the signal, which is connected in terms of signaling to the sensor. Such an electronic circuit, e.g. implemented as ASIC (application specific integrated circuit), may comprise the signal processing device as described above, i.e. the signal processing device and its means for processing and controlling the input signal received by its input means may be implemented in the electronic circuit in form of circuitry. Further, the sensor as well as an electronic circuit for processing the signal from the sensor may be pixelated to allow for spatially resolved photon detection - the sensor, e.g. by providing a pixelated electrode at least at one side of the sensor, especially the side of the sensor facing the electronic circuit in terms of signaling, and the electronic circuit by providing pixelwise signal processing. Thus, the signal processing device of the X-ray detection system may be provided for each pixel of a detector unit individually. There might as well be other implementations. Besides the proposed signal processing device such an electronic circuit as described above may comprise further analog or digital circuitry to process the received signal. In particular, a number of comparators and associated counters may be provided so that photon counting and, in particular, by providing a plurality of comparators, energy-resolved measurement of the detected photons is possible.

According to an embodiment of the present invention, the statistical value is a quantile (or mean value, median or other statistical moment) related to the output signal. The quantile (used below as a representative of all the statistical values mentioned) can be used to describe the probability that the output signal is below a certain (energy) threshold. For example, the pregiven setpoint value is defined as 30% quantile. In this case, the output signal is shifted by the influencing means (offset is varied) so that the statistical value of the output signal is shifted towards the pregiven 30% quantile. Thus, the quantile of the output signal can be adapted by varying the offset.

According to a further embodiment, the output signal is a continuous signal, and the quantile refers to a proportion of time during which the output signal is below a predetermined baseline. In this case, the quantile relates to the relative proportion of time in which the output signal is lower than a predefined threshold called baseline. This relative time below baseline is briefly referred to as TBB. The output signal may be an analogue or a digital signal. In either case TBB can be calculated with respect to a specific baseline.

In a further embodiment, the input signal comprises a pulse signal. Specially, the pulse signal can be regarded as pulse train. For example, the pulse signal is composed of a plurality of impulses. The input signal may comprise further signal components (e.g. noise, leakage etc.). The impulses may appear randomly. E.g. the input signal, namely the pulse signal, results from detecting X-ray photons. Thus, the pulse signal can be used for counting X-ray photons.

In another embodiment, the processing means includes a charge sensitive amplifier or a transimpedance amplifier for amplifying the input signal. The charge sensitive amplifier converts electrical charges into a respective voltage. In contrast to that, the transimpedance amplifier converts a current into voltage. Both amplifiers can be implemented with one or more operational amplifiers.

According to a further embodiment, the controlling means is capable of adding a compensation current to the input signal, wherein the compensation current is being based on an output of the respective amplifier. Thus, a feedback loop can be realized. Specifically, the input signal is amplified by the charge sensitive amplifier or the transimpedance amplifier, and the compensation current is generated on the basis of the amplified signal. Finally, the compensation current is added to the input signal, thereby completing the loop. Thus, respective feedback control can be realized.

According to still another embodiment, the compensation current is generated by a baseline holder circuit (in short: baseline holder) or a baseline restorer circuit based on the output signal of the respective amplifier. As defined above, the baseline holder has a relatively small bandwidth and filters out low frequency components of the output signal from the respective amplifier in order to compensate for them. In contrast, the baseline restorer circuit detects pulse-free times and pulses the signal to the desired baseline during these times. The baseline restorer circuit usually has a much higher bandwidth than the baseline holder. Thus, the baseline used for determining the TBB can be influenced by the baseline holder circuit or the baseline restorer circuit.

According to another embodiment, the baseline holder comprises as concrete implementation of the part of the controlling means for determining the statistical property of the output signal two adjustable current sources of opposite polarity and independent strength for providing one current to an integrator for generating the compensation current, (only) while the output signal is below a pregiven baseline, and for providing the other current of opposite polarity to the integrator for generating the compensation current, (only) while the output signal is above a pregiven baseline. Specifically, the baseline holder circuit may comprise an integrator circuit and two adjustable current sources of opposite polarity connected to an input of the integrator. An output from the integrator is a basis of the compensation current, wherein one of the adjustable current sources provides current only if the output signal is below a pregiven baseline, and the other one of the adjustable current sources provides current only if the output signal is above the pregiven baseline. This means that the compensation current is generated on the basis of the positive and/or negative current provided to an integrator by the adjustable current sources. In other words, the positive and negative current do not represent the compensation current, but they are used for generating the compensation current.

The adjustable current sources can be implemented in various ways, e.g. by a series of optionally switchable partial current sources of different current strengths (e.g. powers of 2) or by potentiometers, etc.

The integrator is used for integrating the currents from the two adjustable current sources, wherein the output from the integrator is a basis of the compensation current. Usually, the integrator integrates the currents and provides a respective voltage. Such voltage has to be converted into the compensation current. A respective V/I converter may be provided. Thus, the integrator integrates the positive current as long as the output signal of the output means of the signal processing device is below the baseline, and it integrates the negative current as long as the output signal of the output means is above this baseline. Thus, the compensation current reduces the distance from the pregiven baseline.

In another embodiment, a current strength of one of the adjustable current sources of opposite polarity is proportional to the proportion of time during which the output signal is above the predetermined baseline, and a current strength of the other one of the adjustable current sources is proportional to the proportion during which the output signal is below the predetermined baseline. E.g. the positive current is proportional to the proportion of time of the input signal above the predetermined baseline, and the negative current is proportional to the proportion of time of the input signal below the predetermined baseline. In case the proportion (e.g. TBB) is small, a high positive current and a relatively small negative current are provided. Otherwise, if the proportion is high, a relatively small positive current and a relatively high negative current are provided. Thus, the absolute values of both currents have the required relation of (1 - TBB)/TBB.

In another aspect of the present invention there is provided a photon counting X-ray imaging system including an X-ray detection system as described above, wherein the input signal comprises a respective pulse signal, and a counting unit for counting pulses of the output signal, which exceed a predetermined energy threshold. Thus, reliable photon counting can be performed with the aid of the above-described signal processing device.

In particular, a counting unit may comprise, e.g., at least one comparator and an associated counter to count pulses exceeding an energy threshold associated with the comparator. In particular, in a pixelated X-ray detection system, each pixel may be associated with or comprise at least one counting unit.

Based on the data of the counting unit an image can be generated by an image generation unit. Advantageously, high quality images can be obtained.

The counting unit may be capable of providing count rate values determined for several energy levels of the X-ray photons, e.g. by comprising a plurality of comparators with associated energy thresholds and counters. Furthermore, the counting unit may be capable of providing the count rate values in dependence of a flux of the X-ray photons. Specifically, the count rates may vary with the flux of the X-ray photons. Moreover, the counting unit may be capable of providing a spectral curve of the count rate values. Thus, the counting unit may provide a set of spectral curves of the count rate values over photon energy as a function of the flux of the X-ray photons or a set of flux curves of the count rate values over the flux of the X-ray photons (or tube current) as a function of photon energy.

The above object is also solved by a photon counting X-ray imaging system as described above, wherein the setpoint value of the controlling means is adjustable, and the counting unit is capable of providing a flux-dependent count rate response, so that spectral characteristics of the flux-dependent count rate response are adjustable with the setpoint value of the controlling means. The setpoint value represents a target point for the statistical value. In other words, the setpoint value is used to influence the spectral characteristics of the flux-dependent count rate responses (linearity curves). Specifically, the position of the spectral characteristics may be varied by changing the setpoint value.

According to a further embodiment, the setpoint value of the controlling means is adjusted, so that a flux dependent shift of features in the spectral characteristics is minimized. For instance, a local maximum of the spectrum changes its position as a function of the flux (e.g. the peak height of the output pulses corresponding to a certain characteristic line in the input X-ray spectrum can increase at higher fluxed due to pile-up with other concurrent pulses). This dependency from the flux can be reduced by choosing a proper setpoint value.

According to a further aspect of the present invention there may be provided a computed tomography device comprising a photon counting X-ray imaging system as described above. Thus, also CT-devices may benefit from the advantages of the inventive photon counting X-ray imaging system (e.g. through a reduced flux-dependency of the energy scale, through flux-independent contrast and/or through flux-independent Hounsfield-units).

The above object is also solved by a method of processing a signal, the method comprising the steps:
- receiving an input signal,
- determining an output signal from the input signal,
- determining a statistical value from the output signal,
- determining an input signal modification (e.g. offset) which reduces or minimizes a difference between the statistical value and a setpoint value.

In particular, the above object is solved by a method of processing a signal using an X-ray detection system as described above, the method comprising the steps:
- receiving an input signal from the detector unit by the input means of the signal processing device,
- determining an output signal from the input signal by the processing means of the signal processing device,
- determining a statistical value from the output signal by the controlling means of the signal processing device,
- determining an input signal modification which reduces the difference between the statistical value and a setpoint value by the controlling means of the signal processing device, and
- applying the input signal modification on the input signal by the controlling means.

Usually, this reduction of the difference in the statistic characteristic only becomes visible with an updated output signal.

The advantages and further developments of the signal processing device, the X-ray detection system, the photon counting X-ray imaging system, and the computed tomography device also apply to the inventive method. The above described functional features of the respective devices can be seen as corresponding method features.

Furthermore, there may be provided a computer program or a computer-readable medium comprising instructions, which, when the program is executed by a signal processing device as described above, cause the signal processing device to carry out the above-mentioned method.

The present invention will now be described in more detail in connection with the attached drawings showing in:
FIG 1 an exemplary embodiment of a computed tomography device;
FIG 2 a basic implementation of a baseline holder;
FIG 3 an example for implementing the baseline holder, and
FIG 4 and 5 sections of differential count rate spectra for different fluxes of X-ray photons.

The following embodiments represent preferred examples of the present invention.

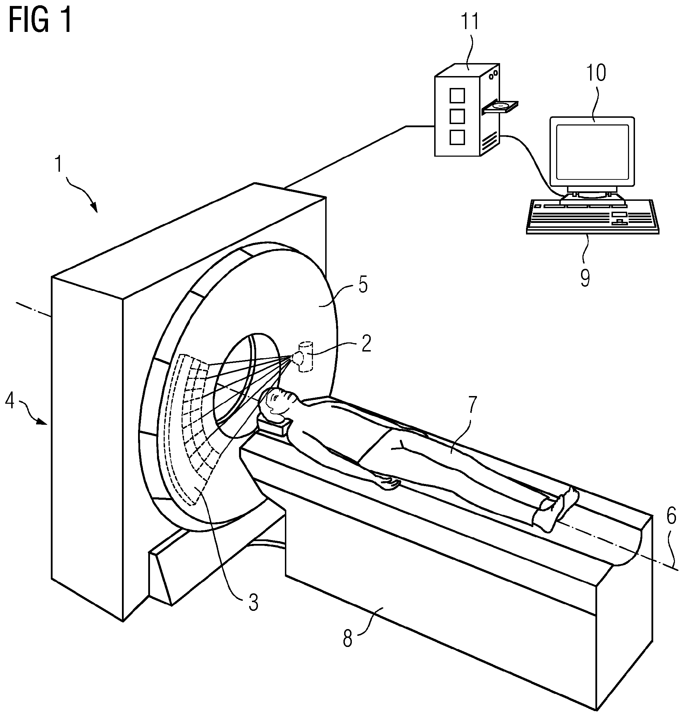

FIG 1 shows a schematic representation of an advantageous embodiment of a proposed X-ray device as a medical CT (computed tomography) device 1. The CT device 1 may comprise the X-ray source 2, a photon-counting X-ray detector comprising a detector unit 3 and a processing unit 11 as a kind of signal processing device. The signal processing device and the detector unit are shown separately here. In advantageous variants, however, these are implemented in the immediate vicinity of each other. In particular, the signal processing device may be comprised by an electronic circuit, for example in the form of an ASIC, which is connected to the detector unit. The X-ray source 2 and the X-ray detector unit 3 may be arranged in opposition to each other. The X-ray source 2 may be configured to illuminate the X-ray detector unit 3 with X-rays along an X-ray incidence direction. The X-ray detector unit 3 may comprise a direct-conversion (semiconductor) X-ray detector layer as sensor layer. For example, the X-ray detector layer may comprise CdTe, CdZnTe, CdTeSe, CdZnTeSe, CdMnTe, Si, GaAs or CrGaAs as semiconductor material.

The CT device 1 can also comprise a gantry 4 with a rotor 5. The X-ray source 2 and the X-ray detector unit 3 can be arranged in a defined arrangement on the rotor 5, in particular integrated into the rotor 5 or attached to the rotor 5. The rotor 5 can be mounted to rotate about an axis of rotation 6. The examination object 7 to be imaged can be mounted on the patient positioning device 8 and can be moved along the axis of rotation 6 through the gantry 4. The processing unit 11 can be used to control the CT device 1 and may comprise an image generation unit to calculate sectional images or volume images of the examination object 7. The processing unit 11 may comprise a counting unit for counting pulses generated by the detector unit 3 when detecting X-ray photons. In advantageous variants, however, the counting unit can also at least in parts be comprised by an electronic circuit as mentioned above, which is connected to and in immediate vicinity to the detector unit. An input device 9, for example a keyboard, and an output device 10, for example a screen and/or display, can be connected to the processing unit 11, in particular coupled by signal technology. The input device 9 can advantageously be integrated into the output device 10, for example in the case of an input display, in particular a resistive and/or capacitive input display. The output device 10 can be designed to display a graphical representation of the counting signals and/or the X-ray image data set.

The schematic representations contained in the figures described do not depict any scale or proportions.

A further example (not shown in the figures) may relate of a monoplane X-ray system with a C-arm held by a stand in the form of a six-axis industrial or articulated robot, at the ends of which an X-ray radiation source, for example an X-ray source with X-ray tube and collimator, and an X-ray image detector as the detector unit 3 are attached as an image acquisition unit. The realization of the X-ray diagnostic device is not dependent on the industrial robot. Conventional (fixed or movable) C-arm devices can also be used.

In this example a patient or a technical object to be examined may be positioned on a table top of a patient positioning table in the beam path of the X-ray emitter. A system control unit with a computer for image processing is connected to the X-ray diagnostic device, which receives and processes the image signals from the X-ray image detector. The system control unit may comprise a photon counting X-ray imaging system and/or a signal processing device as described above. The X-ray images can then be viewed on the displays of a monitor light. The monitor light can be held by means of a ceiling-mounted, longitudinally movable, pivotable, rotatable and height-adjustable support system with a cantilever and lowerable support arm. A counting unit for counting X-ray pulses may also be provided in the system control unit.

In a specific embodiment the signal processing device 11 uses a baseline holder (BLH) as controlling means with a quantile-based setting to compensate for a dark current and to achieve a photon flux-independent position of the count rate spectrum. The basis for controlling the BLH is the distribution function, which describes the probability that the signal is below a certain energy threshold. Preferrably, the BLH continuously determines this percentage of the signal below a baseline (the Time Below Baseline, TBB) and shifts the signal so that this percentage corresponds to a set quantile value. For example, if a 30% quantile is set, the signal is shifted so that it is 30% of the time below the baseline. The baseline itself is typically selected to correspond to an energy of 0 keV.

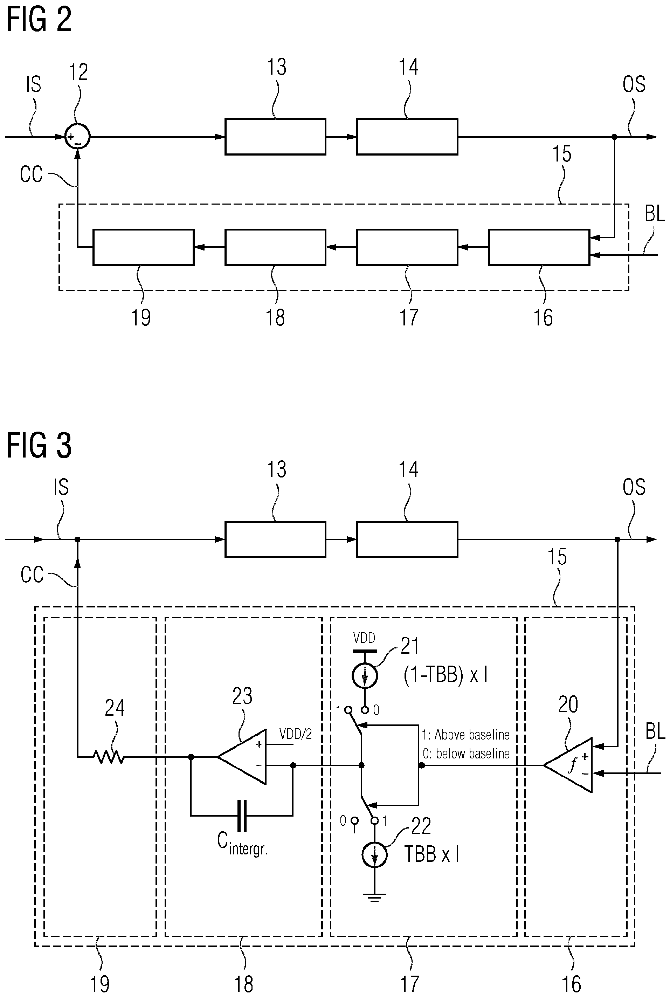

The flow chart of FIG 2 shows a possible signal processing of a signal of an X-ray detector unit 3. This signal is called input signal IS here. The input signal IS is a time variant pulse signal, usually. The input signal is fed to the positive input of a substractor 12 (or with a negative sign to an adder). Alternatively, the polarities of the signals can be reversed at muliple points in the circuit without altering the scope of the invention. The label "positive"/"negative" are used here to provide a self-consistent explaination, without being limited to this specific choice of polarity set. The output of the substractor 12 is provided to an amplifier 13, which amplifies the signal. The amplified signal may optionally be fed to a shaper 14 in order to shape the pulses of the pulse signal. As a result, an output signal OS is provided at the output of the shaper 14 or the amplifier 13. Alternatively, the amplifier might feature intrinsic shaping functionality so that no subsequent shaper is needed and the output signal OS is directly provided by the amplifier.

The output signal OS is fed to the baseline holder 15 which produces a compensation current CC. The compensation current CC is provided to the negative input of the substractor 12. Thus, the compensation current CC is subtracted from the original input signal IS. The difference signal is provided to the amplifier 13. This means that there is provided a feedback loop wherein the baseline holder 15 feeds back the output signal OS in processed form to the input signal IS.

The baseline holder 15 comprises a comparator 16. The comparator 16 compares the output signal OS with a baseline BL, which may be provided externally. Specifically, the baseline BL may be set manually via an interfce.

The output of the comparator 16 is fed to a weighting unit 17 for quantile based weighting. The output of the weighting unit 17 is input to an integrator 18 which integrates the signal. The output of the integrator 18 is supplied to a voltage current converter 19. This voltage current converter 19 produces the compensation current CC from the integrated signal.

As described above, the input signal IS is first amplified and optionally pulse-shaped. The comparator 16 of the BLH 15 compares the amplified/pulse-shaped signal with a reference, a baseline voltage BL, and only outputs in binary form whether the signal is currently above or below this baseline. These two phases are then weighted according to the selected quantile: phases below the baseline are weighted in relation to phases above the baseline with the factor (1-TBB)/TBB. To set a 30% quantile, for example, a factor of 0.7/0.3=2.333 would be necessary with TBB=0.3. The weighted signal is finally integrated to obtain a control voltage, which is converted into the compensation current CC by means of the voltage/current converter 19 and fed into the detector input, e.g. by adding it to or subtracting it from the input signal IS.

A concrete implementation example of the BLH concept described is shown in FIG 3. A limiting differential amplifier 20, for example, can serve as the comparator 16 here. Weighting is carried out by the weighting unit 17 comprising two current sources 21 and 22 of different polarity, whose absolute values have the required ratio (1-TBB)/TBB to each other and are active alternately according to the output signal of the comparator 16. If the output signal OS is below the baseline BL (state "0"), the current source 21 connected to VDD is switched to the integrator 18 in order to feed positive current to the integrator 18. In this state "0" the other current source 22 connected to ground is decoupled form the integrator 18. Otherwise, if the output signal OS is above the baseline BL (state "1"), the current source 22 connected to ground is switched to the integrator 18 in order to feed negative current to (draw current from) the integrator 18. In this state "1" the other current source 21 connected to VDD is decoupled form the integrator 18.

The respective current is then fed to a differential amplifier 23 connected as an integrator to form the integrator 18. The output voltage of the integrator 18 is converted into the compensation current CC using a resistor 24, for example.

If the current sources 21, 22 are kept configurable, a wide variety of quantiles can be selected for control.

While the desired quantile is set by the ratio of the two currents, the speed of the regulation can also be set independently of this by selecting a suitable average current I/2 and the integration capacitance Cintegr so that it matches the requirements of the application.

Other implementations of the BLH concept described are possible, as various circuits can be used for the different components shown in Figure 1. For example, transistors can also be used as voltage/current converters. In the simplest case, the integrator can consist of just a single capacitor.

Even much more complex implementations are theoretically conceivable, e.g. the use of a time-to-digital converter, which converts the duration of both comparator states into digital values and carries out further processing (weighting, integration) in the digital domain.

Such signal processing allows for making the energy classification of the pulse measurement as stable and robust as possible over a wide range of possible X-ray fluxes.

Various advantages result from using of a BLH with quantile-based adjustment and its circuit realization:
- The signal baseline does not have to be visible, as required by the function of a BLR, for example. This means that its use is not limited to applications with low photon fluxes.
- In the low flux case, the signal baseline is regulated to the desired reference baseline, regardless of the selected quantile. This means that the described BLH always behaves very similarly to a BLH with DC- or AC-coupled behavior in the low flux case and practically only compensates for the dark current.
- In the case of higher photon fluxes, the BLH setting, the selected quantile, defines the direction and strength of the shift in the count rate spectrum. A suitable choice of quantile (e.g. based on calibration measurements) can ensure that the position of the count rate spectrum is practically independent of photon flux for the given input signal spectrum. Conventional BLHs with DC- or AC-coupled behavior cannot achieve this.
- Due to the photon flux-independent position of the count rate spectrum, the BLH is particularly suitable for applications (such as medical X-ray imaging) in which high or strongly fluctuating photon fluxes can occur.
- The quantile-based setting is particularly suitable for simple realization. This is the case because the mode of operation is based solely on a ratio of two variables (e.g. two current sources) and can therefore be configured very easily and implemented independently of the process, voltage and temperature.
- The reaction speed of the described BLH to changes in the photon flux can be freely adjusted independently of the selected quantile. This allows it to be easily adapted to the requirements of the field of application. In the field of medical X-ray imaging, for example, it can be selected so that an adjustment is made within a measurement interval.
- The possibility of an adjustable/configurable quantile means that the BLH can be adapted to different pulse shapes and amplifier topologies.
- The selectable quantile can also be used to achieve a desired flow-dependent shift of the energy scale in the positive or negative direction. This can be used in particular to improve the linearity behavior (at the expense of energy stability), since higher energy thresholds paralyze later.

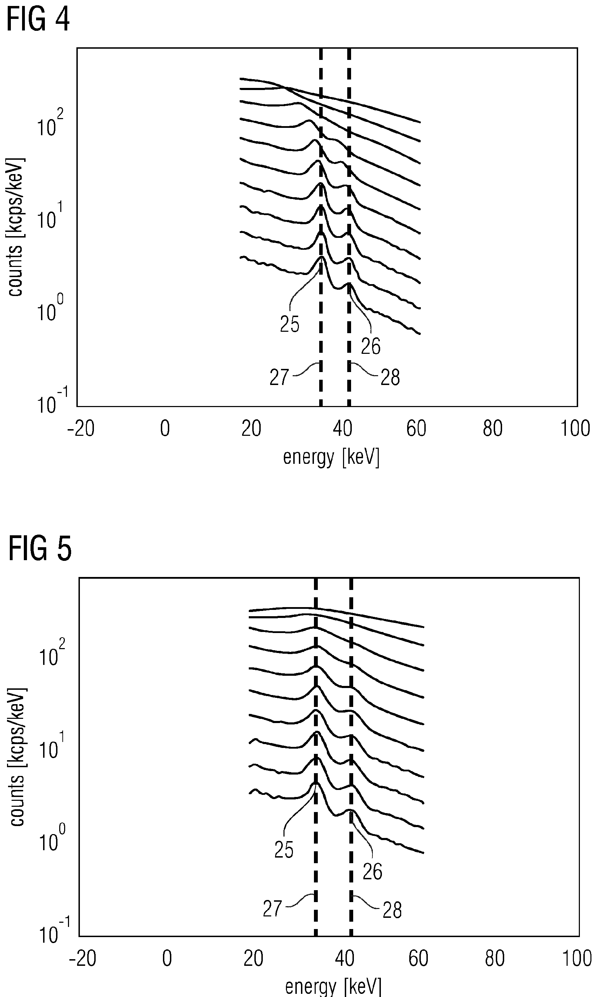

The main advantage of this concept is therefore that it can be used to achieve an almost flux-independent stabilization of the energy scale. For use in computed tomography, this means that the measured contrasts and HU values are independent of flux. This is a key requirement for quantitative CT imaging. This advantage is shown in FIG 4 and 5.

FIG 4 shows sections of differential count rate spectra for different fluxes of X-ray photons. The higher the flux, the higher the counts (i.e. the respective spectrum). The spectra (here also called spectral characteristics) have two exemplary spectral features, namely a first local maximum 25 and a second local maximum 26. The higher the flux, the more the respective local maximum 25, 26 is widened or smaered and the further it is shifted to the left towards smaller energy. However, the shift can also be to the right towards higher energy. The shift can be easily recognized with respect to vertical dotted lines 27 and 28. The shift can be compared to the fact that the color of an image changes with increasing brightness. However, this is undesirable.

As shown in FIG 5, the inventive method is capable of stabilizing the spectral features. For instance, the local maxima 25 and 26 are kept constantly on the vertical lines 27 and 28 even with increasing flux. This can be obtained by adjusting the quantile respectively. The spectra or spectral features do not show an energy dependency from the flux.

At the same time, a dynamic, automatic adaptation to the locally and temporally changing leakage currents of the individual pixels is achieved. On the one hand, this eliminates the need for interim leakage current calibration measurements. On the other hand, it creates a detector system that is robust against changes in the sensor leakage current. This enables the spatial and temporal stability of the sensor signal required for CT imaging.

The concept described above thus represents an advantagous mean to make photon-counting imaging and especially photon-counting CT more reliable.

## Claims

1. X-ray detection system comprising a detector unit (3) for generating an input signal (IS) based on detected X-ray photons and a signal processing device (11) for processing the input signal, wherein the signal processing device (11) comprises
- input means for receiving the input signal (IS),
- processing means for generating an output signal (OS) from the input signal (IS),
- controlling means for influencing the input signal (IS),
- the controlling means being capable of
* determining a statistical value of the output signal (OS),
* comparing the statistical value with a pregiven setpoint value and
* influencing the input signal such that the difference between the statistical value and the setpoint value in the output signal is reduced.

2. X-ray detection system according to claim 1, wherein the statistical value is a quantile or duty cycle of the output signal (OS).

3. X-ray detection system according to claim 2, wherein the input signal (IS) is a continuous signal and the quantile refers to a proportion of time during which the output signal is below a predetermined baseline.

4. X-ray detection system according to one of the preceding claims, wherein the input signal (IS) comprises a pulse signal.

5. X-ray detection system according to one of the preceding claims, wherein the processing means includes a charge sensitive amplifier or a transimpedance amplifier for amplifying the input signal (IS).

6. X-ray detection system according to claim 5, wherein the controlling means is capable of adding a compensation current (CC) to the input signal (IS), the compensation current (CC) being based on an output signal of the respective amplifier.

7. X-ray detection system according to claim 6, wherein the compensation current is generated by a baseline holder circuit (15) or a baseline restorer circuit based on the output signal of the respective amplifier.

8. X-ray detection system according to claim 7, wherein the baseline holder circuit (15) comprises an integrator circuit (18) and two adjustable current sources (21, 22) of opposite polarity connected to an input of the integrator, an output from the integrator (18) is a basis of the compensation current (CC), wherein one of the adjustable current sources provides current only if the output signal (OS) is below a pregiven baseline (BL), and the other one of the adjustable current sources provides current only if the output signal (OS) is above the pregiven baseline (BL).

9. X-ray detection system according to claim 3 and 8, wherein a current strength of one of the adjustable current sources of opposite polarity is proportional to the proportion of time during which the output signal (OS) is above the predetermined baseline (BL), and a current strength of the other one of the adjustable current sources is proportional to the proportion during which the output signal (OS) is below the predetermined baseline (BL).

10. Photon counting X-ray imaging system including
- an X-ray detection system according to one of the preceding claims, wherein the input signal (IS) comprises a respective pulse signal, and
- a counting unit for counting pulses of the output signal (OS), which exceed a predetermined energy threshold.

11. Photon counting X-ray imaging system according to claim 10, wherein the setpoint value of the controlling means is adjustable, and the counting unit is capable of providing a flux-dependent count rate response, so that spectral characteristics of the flux-dependent count rate response are adjustable with the setpoint value.

12. Photon counting X-ray imaging system according to claim 11, wherein the setpoint value of the controlling means is adjusted, so that a flux dependent shift of features in the spectral characteristics is minimized.

13. Computed tomography device (1) comprising a Photon counting X-ray imaging system according to one of the claims 10 to 12.

14. Method of processing a signal using an X-ray detection system according to one of the claims 1 to 9, the method comprising the steps:
- receiving an input signal (IS) from the detector unit (3),
- determining an output signal (OS) from the input signal (IS),
- determining a statistical value from the output signal (OS),
- determining an input signal modification (CC) which reduces the difference between the statistical value and a setpoint value, and
- applying the input signal modification (CC) to the input signal (IS).
